# FASCICULE DE BREVET EUROPEEN

(11) **EP 0 834 172 B1**
(45) Date de publication et mention de la délivrance du brevet: **17.03.1999**
(21) Numéro de dépôt: 96922925.1
(22) Date de dépôt: 14.06.1996
(51) Int. Cl.: G10K 11/00, G01V 1/38, B63B 21/66, B63G 8/42, B63B 35/68

(54) **EMETTEUR ACOUSTIQUE REMORQUE**
GESCHLEPPTER AKUSTISCHER SENDER
TOWED ACOUSTIC TRANSMITTER

(30) Priorité: 16.06.1995 FR 9507228
(43) Date de publication de la demande: 08.04.1998
(73) Titulaire: THOMSON-CSF, 75008 Paris (FR)
(72) Inventeur: WARNAN, François, F-92402 Courbevoie Cédex (FR); BAUDOUX, Jean-Pierre, F-92402 Courbevoie Cédex (FR)
(74) Mandataire: Desperrier, Jean-Louis
(86) Numéro de dépôt international: FR9600912
(87) Numéro de publication internationale: WO9700513

(56) Documents cités:
- EP-A- 0 193 215
- FR-A- 2 319 911
- FR-A- 2 655 940
- US-A- 3 932 835
- US-A- 4 658 750
- US-A- 4 992 999

## Description

La présente invention se rapporte aux émetteurs acoustiques remorqués qui permettent d'émettre dans l'eau de mer des signaux acoustiques destinés notamment à être reçus, après réflexion sur un obstacle détecté, par une antenne acoustique linéaire de réception elle-même remorquée à l'arrière de cet émetteur.

Il est connu de remorquer derrière un bateau un véhicule sous-marin pouvant contenir diverses charges utiles telles qu'un sonar. Ce véhicule navigue à l'arrière du bateau remorqueur sous une immersion déterminée par exemple par des volets manoeuvrés de manière adéquate pour maintenir cette immersion à la valeur souhaitée.

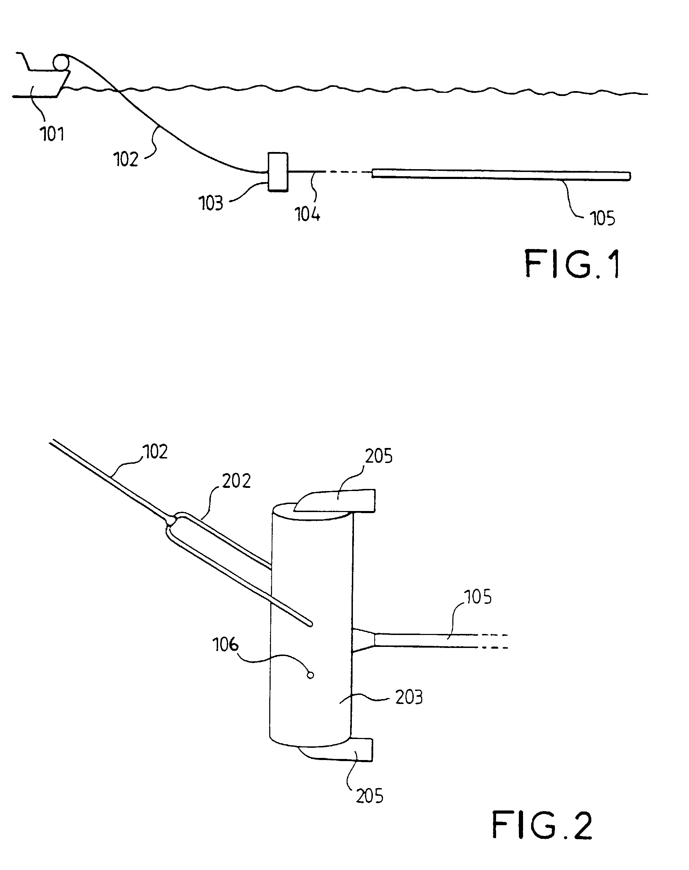

Un cas particulier consiste, comme représenté sur la figure 1, à remorquer derrière un bateau tracteur 101, à l'aide d'un câble de remorquage 102, un véhicule 103 comprenant essentiellement un émetteur acoustique qui permet d'insonifier le volume sous-marin. Les échos en retour obtenus par cette insonification sont reçus par une antenne linéaire acoustique 105, elle-même remorquée par un câble 104 accroché à l'arrière du véhicule sous-marin 103. Ce genre de dispositif étant destiné à fonctionner à des fréquences relativement basses, de l'ordre du kHz, l'émetteur contenu dans le véhicule 103 est donc relativement volumineux. Pour obtenir les caractéristiques de directivité généralement souhaitées, en particulier dans le plan vertical afin de lutter contre les phénomènes de réverbération, cet émetteur acoustique est généralement d'une forme allongée, avec une hauteur d'environ 4 à 5 fois son épaisseur ainsi que sa largeur.

FR-A-2 655 940 divulgue un détecteur acoustique remorqué qui n'est pas particulièrement adapté aux problèmes spécifiques des antennes acoustiques verticales.

Pour pouvoir garder ces caractéristiques de directivité, il faut bien entendu que l'antenne d'émission, et donc le corps du véhicule auquel elle est généralement liée rigidement, se déplace selon une trajectoire rectiligne, tout au moins tant que le bateau ne tourne pas, et garde une assiette et un cap constants, c'est-à-dire dans la pratique que le corps reste vertical et orienté vers le bateau. Pour obtenir ceci, on utilise généralement une structure telle que représentée sur la figure 2. Le corps 203 du véhicule, qui a sensiblement la forme d'une colonne à section elliptique d'assez grand allongement, est tracté par le câble 102, auquel il est réuni par un étrier rigide 202 dont les points de fixation sur le véhicule sont fixés de manière articulée à l'emplacement du centre de traînée de ce corps. De cette manière cet étrier assure une bonne stabilité en roulis du véhicule tracté. Le câble 104 de remorquage de l'antenne linéaire 105 est lui-même attaché à l'arrière du corps, à un endroit situé dans le plan horizontal passant par ce centre de traînée. Pour assurer la stabilité verticale du véhicule, on s'arrange pour que la répartition des masses à l'intérieur du corps soit telle que le centre de gravité 106 de celui-ci soit placé bien en-dessous de l'articulation entre l'étrier 202 et le corps 203. La stabilité en lacet provient en partie de l'action de l'étrier 202 et on l'améliore en utilisant des dérives verticales 205 fixées en haut et en bas du corps.

Un tel dispositif fonctionne relativement bien, tout au moins tant que le rapport hauteur/largeur du corps du véhicule n'est pas trop élevé et que l'on ne cherche pas à l'immerger trop profondément.

Or la tendance actuelle consiste à rechercher des immersions de plus en plus profondes tant pour l'émetteur que pour l'antenne de réception qui lui est associée, essentiellement pour augmenter la portée de détection. Par exemple, US-A-4 992 999 décrit une antenne verticale dépassant d'un véhicule sous-marin autonome, de forme essentiellement sphérique. Ce véhicule antérieur n'est pas prévu pour être tracté sous l'eau à grande vitesse, et doit être d'une grande complexité du fait de l'absence de câble tracteur. Une solution remorquée est donc souhaitable. Dans ces conditions, et comme on ne peut pas se permettre d'allonger excessivement la longueur du câble tracteur 102, on obtient pour des profondeurs importantes une inclinaison elle-même importante de l'étrier 202 par rapport à la verticale du corps du véhicule. Le rapprochement de l'étrier par rapport à cette verticale tend à augmenter considérablement l'instabilité du corps du véhicule remorqué.

En outre, afin d'avoir à la fois un gain d'antenne plus élevé et une consommation électrique plus faible, on cherche également à utiliser des émetteurs beaucoup plus hauts que ceux déjà connus. Les véhicules comprenant ces émetteurs ont alors sensiblement la forme d'une aile verticale à fort rapport hauteur/largeur. De tels véhicules ont une très mauvaise stabilité en lacet et en cas de manoeuvre du bateau tracteur, ce qui tend à les faire dévier d'une trajectoire rectiligne. En outre, dès que la vitesse dépasse une dizaine de noeuds on constate l'apparition d'un effet du type "cerf-volant". Sous cet effet le corps tire d'un côté ou de l'autre et tend à se coucher, ce qui l'entraîne à remonter à la surface au-delà d'une certaine vitesse car la portance hydrodynamique devient alors très élevée devant le poids dans l'eau de ce corps.

Tous ces effets sont inacceptables lors de l'utilisation opérationnelle et il n'est pas envisageable de limiter les capacités opérationnelles de ce système en fonction des circonstances rencontrées, par exemple en réduisant la vitesse.

On a essayé d'améliorer ce système en lui rajoutant un empennage, articulé au même point d'articulation que l'étrier 202 et qui permet de stabiliser ce mouvement indésirable dans une certaine mesure. Le câble 104 permettant de remorquer l'antenne linéaire est alors accroché à l'arrière de cet empennage. Malheureusement lors de la sortie de l'eau pendant les opérations de récupération de l'ensemble l'empennage tend à se relever, et l'on est amené pour éviter cet effet indésirable à motoriser l'articulation entre l'empennage et le corps, de manière à placer celui-ci dans l'alignement de l'empennage avant la sortie de l'eau. Cette motorisation complique bien entendu le dispositif et augmente son coût. Elle est en outre d'une efficacité toute relative et on constate que la mise à l'eau et la récupération d'un tel corps présente de grandes difficultés. En effet lorsqu'une partie du corps commence à émerger, la traînée de la partie immergée devient prédominante et tend à faire basculer l'ensemble du dispositif. Les mouvements ne sont plus alors maîtrisables, d'autant plus que des perturbations dues au sillage du bateau et aux remous des hélices viennent se rajouter aux perturbations dues au passage à l'interface air/eau.

En outre l'emplacement de stockage de ce dispositif dans le bateau remorqueur en dehors des périodes opérationnelles est de dimensions limitées. Pour pouvoir ranger le véhicule dans cet emplacement, on est alors amené à installer un système de basculement du véhicule au moment du mouillage ou de la récupération, afin de pouvoir le ranger dans une position qui soit compatible avec la hauteur limitée disponible dans l'emplacement de stockage. Les moyens à mettre en oeuvre sont lourds et coûteux et leur utilisation est risquée et dangereuse.

Pour pallier ces inconvénients, l'invention propose un émetteur acoustique remorqué, du type comprenant une antenne acoustique carénée verticale et une crosse de remorquage, principalement caractérisé en ce qu'il comprend un corps avant lesté et caréné réuni à l'antenne par une poutre de faible section, que les masses respectives de l'antenne et du corps sont telles que le centre de gravité de l'ensemble est situé prés de la jonction de la poutre et du corps avant et en dessous de cette poutre, et que la crosse de remorquage est articulée sur une rotule située sur la partie supérieure de la poutre au dessus de ce centre de gravité.

Selon une autre caractéristique, la poutre est fixée sensiblement au centre de l'antenne carénée et l'antenne supporte également des ailerons horizontaux.

Selon une autre caractéristique, l'émetteur comprend en outre des moyens de remorquage d'une antenne acoustique linéaire fixée à l'arrière de l'antenne acoustique carénée dans le prolongement de ladite poutre.

Selon une autre caractéristique, l'émetteur comprend en outre des ailerons dépresseurs horizontaux fixés sur la poutre à l'arrière du point de fixation de la crosse de remorquage, pour obtenir un effet de déportance négative tendant à faire immerger l'émetteur sous l'action du remorquage.

Selon une autre caractéristique, l'antenne acoustique carénée comprend un ensemble de transducteurs distincts inclus dans des carénages individuels, ces carénages étant réunis entre eux par des plans fixes verticaux de section très mince.

Selon une autre caractéristique, l'antenne acoustique carénée est creuse et comprend des moyens permettant à l'eau de mer de remplir ces parties creuses lors de l'immersion et de s'échapper lors de la récupération.

Selon une autre caractéristique, la crosse de remorquage et la poutre sont aménagés pour permettre d'accrocher en position suspendue ledit émetteur à une selle située sur le système de mouillage et de capture de l'émetteur.

D'autres particularités et avantages de l'invention apparaîtront clairement dans la description suivante, présentée à titre d'exemple non limitatif en face des figures annexées qui représentent :
- la figure 1, une vue schématique du système général de remorquage d'une antenne acoustique linéaire par l'intermédiaire d'un émetteur acoustique remorqué;
- la figure 2, une vue d'un émetteur acoustique remorqué selon l'art connu;
- les figures 3 et 4, des vues de côté et de dessus d'un émetteur acoustique remorqué selon l'invention;
- la figure 5, une vue de dessus d'une variante de l'invention; et ,
- la figure 6, une vue de l'antenne d'une autre variante de l'invention.

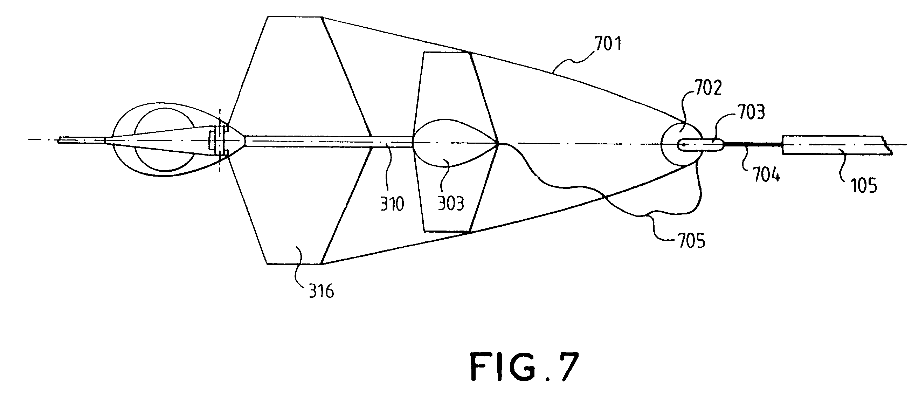

- la figure 7, une vue de dessus d'une sous-variante de la variante de la figure 5.

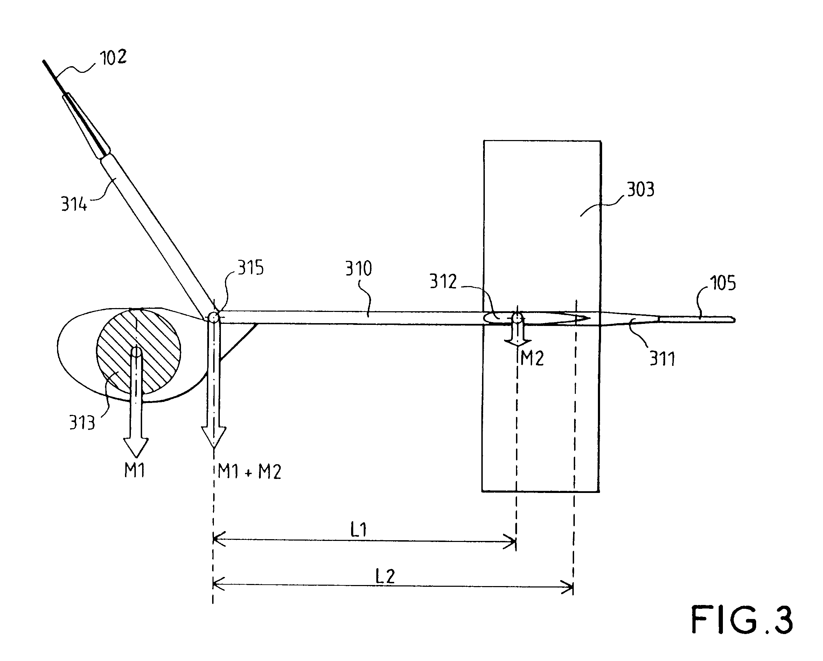

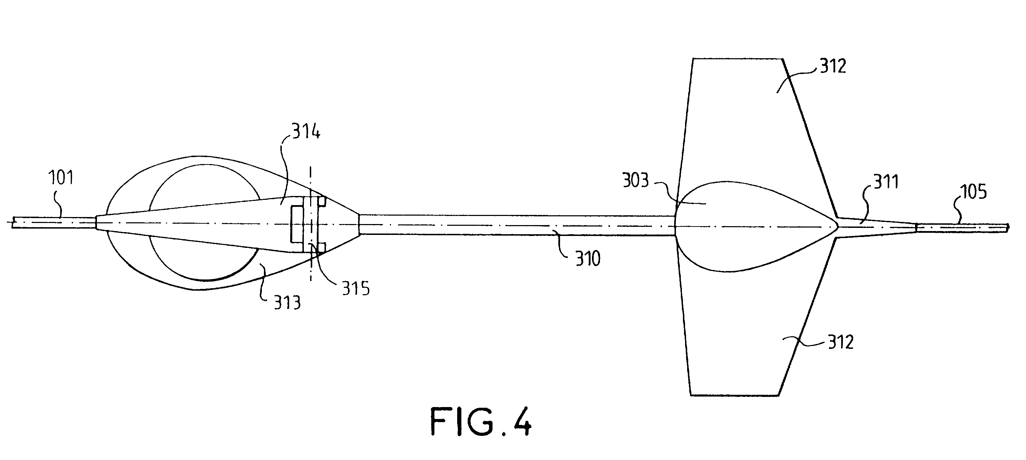

Le véhicule émetteur selon l'invention représenté sur les figures 3 et 4 comprend une antenne acoustique d'émission carénée 303 dont la section horizontale est ovoïde afin d'adopter un profil hydrodynamique de résistance et de portance minimales. Cette antenne est verticale et forme une dérive arrière du véhicule remorqué.

Cette antenne est fixée en son milieu sur une poutre 310 de faible section qui se prolonge vers l'arrière par une attache 311 permettant d'accrocher le câble 105 de traction de l'antenne acoustique linéaire de réception.

L'antenne acoustique 303 comporte en outre deux ailerons horizontaux 312 qui sont fixés perpendiculairement à sa surface au centre de celle-ci, et donc au niveau de la poutre 310. Ces ailerons forment le plan horizontal de l'empennage du véhicule remorqué et permettent, en conjugaison avec l'action de l'antenne carénée, de stabiliser ce véhicule.

La partie avant du véhicule est formée d'un lest caréné 313 qui est fixée à la partie avant de la poutre 310. Sur la figure ce lest caréné est représenté par une sphère pesante entourée par un carénage hydrodynamique, mais il peut très bien être constitué dans la pratique par l'ensemble de carénage et de son contenu. Avantageusement ce lest sera formé par les organes électroniques d'émission permettant d'alimenter les transducteurs de l'antenne 303 par l'intermédiaire de câbles de connexion traversant la poutre 310, qui sera alors creuse. Le câble lourd de remorquage 101 est accroché à un bras rigide 314, qui est relié au véhicule remorqué par l'intermédiaire d'une rotule figurée de manière simplifiée sur la figure par un axe horizontal 315, lequel sert d'articulation entre ce bras et le véhicule. Cet axe est fixé sur le véhicule au point de jonction entre le bras 310 et le lest caréné 313. Dans la réalisation décrite sur la figure, l'extrémité du bras 314 fixée à l'axe 315 a la forme d'une fourchette à deux doigts qui sont fixés aux extrémités de cet axe, et l'axe lui-même est fixé au véhicule remorqué par sa partie centrale. Tout autre système assurant une articulation selon un axe horizontal perpendiculaire au sens d'avancement du véhicule peut être utilisé.

Compte tenu des masses provenant de la structure du véhicule, la partie avant de celui-ci est lestée de manière à représenter une masse M1 dont la résultante avec la masse M2 correspondant à l'ensemble de la partie arrière du véhicule, c'est à dire à la masse de l'antenne carénée 303, correspond à une masse M1 + M2 appliquée en un centre de gravité qui se trouve à l'aplomb de l'axe 315 et en dessous de celui-ci lorsque le véhicule présente une assiette de fonctionnement pour laquelle le bras 310 et les ailerons 312 sont horizontaux.

Le centre de traînée, correspondant pour l'essentiel à la poussée hydrodynamique sur l'empennage formé par l'antenne carénée 303 et les ailerons 312, sera situé lui très en arrière de cet axe 315.

Dans ces conditions, lorsque le véhicule sera remorqué la force correspondant au poids du véhicule sera équilibrée par la force de traction par le câble 101 et la force de traînée correspondante à la portance des empennages et à celle de l'antenne linéaire acoustique 105. Compte tenu des dispositions respectives des divers organes et des forces en présence décrites plus haut, toute amorce d'instabilité tendant à écarter l'axe longitudinal du véhicule remorqué, matérialisé par la poutre 310, en dehors de la trajectoire de remorquage par le bateau tracteur, tend à déclencher un couple de rappel qui ramène le véhicule dans sa position d'utilisation correspondant à la direction décrite ci-dessus pour la poutre 310.

On a ainsi obtenu une stabilité automatique du véhicule remorqué sur sa trajectoire.

Par ailleurs, avec une telle structure, il est aisé de venir saisir le véhicule au niveau de la poutre 310, par exemple à l'aide d'un dispositif connu sous le nom de selle d'accrochage. Dans ces conditions, on peut lorsque l'on ramène le véhicule à bord du bateau remorqueur, venir l'accrocher à une telle selle fixée au système mécanique de mouillage et de capture, à une hauteur suffisante pour permettre de loger l'antenne carénée 303 entre le plafond et le plancher du hangar de stockage. Le véhicule sera ainsi manipulé dans sa position naturelle, qui est elle même stable en fonction de la position de son centre de gravité, et les manipulations à effectuer pour venir le placer le hangar de stockage et le fixer à la selle de maintien seront réduites au minimum et ne présenterons pas de difficultés, ni donc de danger, particulier.

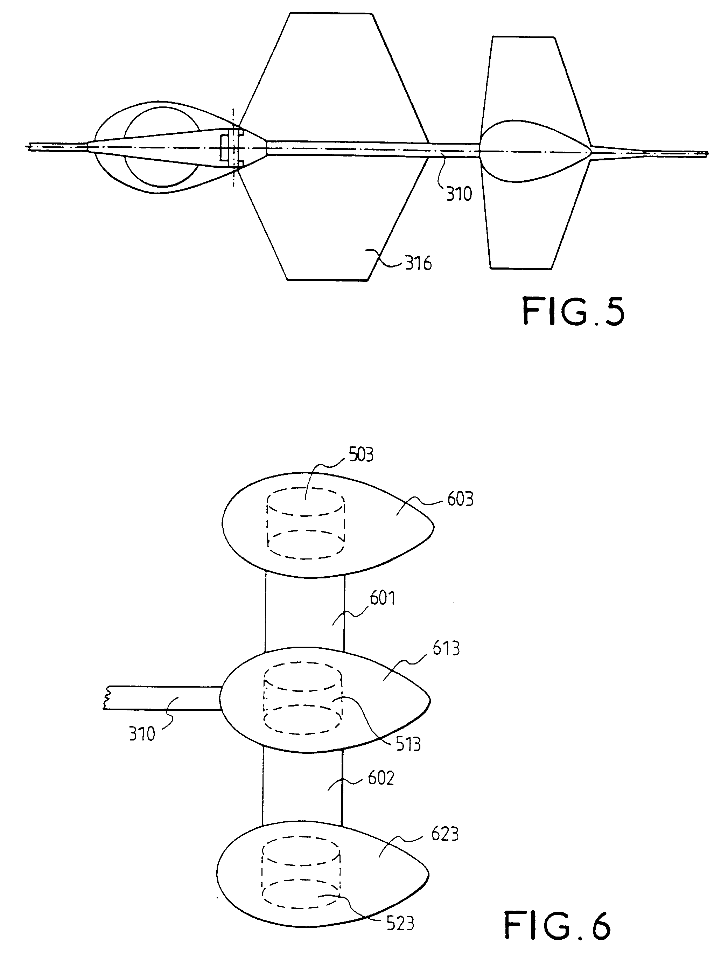

L'ensemble formé de ce véhicule et de l'antenne linéaire qui lui accrochée navigue à une profondeur d'immersion déterminée dont la valeur est réglée par des moyens connus par ailleurs. Dans le but de faciliter l'action de ces moyens de contrôle de l'immersion, afin entre autres de pouvoir atteindre les immersions plus importantes, l'invention propose également de rajouter au véhicule tel que décrit ci-dessus des plans horizontaux 316 tels que représentés sur la figure 5, qui permettent d'obtenir une portance vers le bas, laquelle s'ajoute au poids dans l'eau pour augmenter l'immersion. La valeur de cette déportance varie selon le carré de la vitesse, de la même manière que la traînée du véhicule, ce qui permet de stabiliser l'immersion.

Dans ce cas on peut, pour faciliter la stabilité pendant les manoeuvres de giration, attacher l'antenne de réception 105 non à l'arrière de l'antenne d'émission 303, mais aux extrémités des plans 316 par l'intermédiaire d'un câble 701 formant un V dont la pointe est derrière l'antenne d'émission . L'antenne de réception est fixée par un bout 704 et une chape 703 à une poulie 702 qui roule à l'intérieur du V formé par le câble 701. Les connexions électriques sont assurées par un câble lâche 705. De cette manière le déplacement latéral du point de remorquage correspond virtuellement à une rotation autour de l'intersection des perpendiculaires au câble à ses ancrages sur les plans 316. Ainsi l'ensemble se comporte comme si l'antenne de réception était accrochée prés du centre de remorquage, aussi bien latéralement qu'horizontalement.

Par ailleurs, dans certains cas les transducteurs de l'antenne d'émission contenus dans le carénage 303 sont séparés par des distances relativement grandes par rapport aux dimensions de ces transducteurs. De ce fait il n'est pas utile alors d'utiliser un carénage monobloc pour enfermer l'ensemble des transducteurs. Dans ces conditions, l'invention propose à titre de variante, comme représenté sur la figure 6, de fragmenter ce carénage 303 pour obtenir par exemple trois carénages 603 à 623 enfermant les trois transducteurs distincts 503, 513 et 523. Ces carénages vont avoir la forme la plus hydrodynamique possible et comme dans le cas représenté sur la figure, vont présenter une forme ovoïde. Ils seront maintenus entre eux par des plans fixes verticaux 601 et 602, de section assez étroite et ne présentant qu'une traînée très faible. L'épaisseur de ces plans fixes sera réduite au minimum permettant d'obtenir la rigidité nécessaire tout en permettant le passage interne des conducteurs d'alimentations du transducteur 503 à 523.

Enfin dans certains cas les transducteurs utilisés comportent des volumes internes creux relativement importants qui tendent à donner à l'ensemble une flottabilité positive, ce qui est néfaste au but recherché. Pour compenser cette flottabilité, on est amené à lester d'une manière supplémentaire le véhicule. Lorsque ce lest est obtenu par construction, il nécessite bien entendu un effort plus important et des pièces dimensionnées en conséquence pour pouvoir manipuler le véhicule lors de sa sortie de l'eau et pendant son rangement dans son bâtiment tracteur. Pour obtenir à la fois un poids dans l'eau suffisant et un poids dans l'air aussi faible que possible lorsque le véhicule est sorti de l'eau, l'invention propose en outre de ménager les parties internes creuses de tels transducteurs de manière à pouvoir y introduire une quantité importante d'eau lorsqu'ils sont immergés. Les réservoirs placés à cet effet à l'intérieur de ces transducteurs pour recevoir l'eau seront prévus de manière à ne pas altérer les caractéristiques acoustiques des transducteurs, par exemple en prévoyant une lame d'air entre ces réservoirs et la partie active des transducteurs. En outre les ouvertures destinées au drainage de l'eau de remplissage lorsque le véhicule sort de l'eau seront ménagées de manière à ce que l'évacuation de l'eau se fasse naturellement par gravité.

Le véhicule émetteur acoustique remorqué ainsi décrit permet une navigation stable en profondeur dans un domaine de vitesse important pouvant dépasser les 30 noeuds. La tolérance en manoeuvre pendant la navigation est particulièrement importante. Le mouillage et le relevage de ces véhicules s'effectuent avec autant de facilité qu'avec des corps de forme horizontale car le mouillage et la capture s'effectuent par le dessus, et enfin la stabilité dans le sillage lors de l'immersion et de la récupération est tout à fait satisfaisante.

## Revendications

1. Emetteur acoustique remorqué, du type comprenant une antenne acoustique carénée verticale (303) et une crosse de remorquage (314), caractérisé en ce qu'il comprend un corps avant lesté et caréné (313) réuni à l'antenne par une poutre (310) de faible section, que les masses respectives de l'antenne et du corps sont telles que le centre de gravité de l'ensemble est situé près de la jonction de la poutre et du corps avant et en dessous de cette poutre, et que la crosse de remorquage est articulée sur une rotule (315) située sur la partie supérieure de la poutre au dessus de ce centre de gravité.

2. Emetteur selon la revendication 1, caractérisé en ce que la poutre (310) est fixée sensiblement au centre de l'antenne carénée (303) et en ce que cette antenne supporte également des ailerons horizontaux (312).

3. Emetteur selon l'une quelconque des revendications 1 et 2, caractérisé en ce qu'il comprend en outre des moyens de remorquage (312) d'une antenne acoustique linéaire (105) fixée à l'arrière de l'antenne acoustique carénée (303) dans le prolongement de ladite poutre (310).

4. Emetteur selon l'une quelconque des revendications 1 à 3, caractérisé en ce qu'il comprend en outre des ailerons dépresseurs horizontaux (316) fixés sur la poutre (310) à l'arrière du point de fixation de la crosse de remorquage (314), pour obtenir un effet de déportance négative tendant à faire immerger l'émetteur sous l'action du remorquage.

5. Emetteur selon l'une quelconque des revendications 1 à 4, caractérisé en ce que l'antenne acoustique carénée (303) comprend un ensemble de transducteurs distincts (503,513,523) inclus dans des carénages individuels (603,613,623) ; ces carénages étant réunis entre eux par des plans fixes verticaux (601,602) de section très mince.

6. Emetteur selon l'une quelconque des revendications 1 à 5, caractérisé en ce que l'antenne acoustique carénée (303) est creuse et comprend des moyens permettant à l'eau de mer de remplir ces parties creuses lors de l'immersion et de s'échapper lors de la récupération.

7. Emetteur selon l'une quelconque des revendications 1 à 6, caractérisé en ce que la crosse de remorquage (314) et la poutre (310) sont aménagés pour permettre d'accrocher en position suspendue ledit émetteur à une selle située sur le système de mouillage et de capture de l'émetteur.

8. Emetteur selon la revendication 4, caractérisé en ce que les moyens de remorquage de l'antenne acoustique linéaire (105) comprennent un câble en forme de V fixé par ses deux extrémités aux extrémités des dits (701) ailerons dépresseurs (316), une poulie (702) qui roule à l'intérieur du V formé par le câble, et des moyens (702,704) pour accrocher l'antenne acoustique linéaire sur la poulie.

## Patentansprüche

1. Geschleppter akustischer Sender mit einer vertikalen verkleideten akustischen Antenne (303) und einer Schleppdeichsel (314), dadurch gekennzeichnet, daß er einen vorderen beschwerten und verkleideten Körper (313) besitzt, der mit der Antenne über eine Stange (310) geringen Querschnitts verbunden ist, daß die Masse der Antenne und die des Körpers so gewählt sind, daß der Schwerpunkt der Einheit in der Nähe des Verbindungspunkts der Stange und des vorderen Körpers und oberhalb dieser Stange liegt, und daß die Schleppdeichsel an einem Kniegelenk (315) angelenkt ist, das im oberen Bereich der Stange oberhalb dieses Schwerpunkts liegt.

2. Sender nach Anspruch 1, dadurch gekennzeichnet, daß die Stange (310) im wesentlichen im Zentrum der verkleideten Antenne (303) befestigt ist und daß diese Antenne auch waagrechte Flügel (312) trägt.

3. Sender nach einem beliebigen der Ansprüche 1 und 2, dadurch gekennzeichnet, daß er außerdem Mittel (312) zum Schleppen einer linearen akustischen Antenne (105) aufweist, die hinten an der verkleideten akustischen Antenne (105) in der Verlängerung der Stange (310) befestigt ist.

4. Sender nach einem beliebigen der Ansprüche 1 bis 3, dadurch gekennzeichnet, daß er außerdem waagrechte Tragflächen (316) enthält, die auf der Stange hinter dem Befestigungspunkt der Schleppdeichsel (314) befestigt sind, um einen negativen Auftriebseffekt zu erzielen, der den Sender aufgrund der Schleppwirkung nach unten zu bewegen sucht.

5. Sender nach einem beliebigen der Ansprüche 1 bis 4, dadurch gekennzeichnet, daß die verkleidete akustische Antenne (303) mehrere einzelne Transduktoren (503, 513, 523) in je eigenen Verkleidungen (603, 613, 623) aufweist, die durch feste vertikale Ebenen (601, 602) sehr geringen Querschnitts miteinander verbunden sind.

6. Sender nach einem beliebigen der Ansprüche 1 bis 5, dadurch gekennzeichnet, daß die verkleidete akustische Antenne (303) hohl ist und Mittel enthält, die ein Fluten dieser Hohlräume mit Meerwasser beim Wassern und ein Entweichen des Wassers beim Bergen erlauben.

7. Sender nach einem beliebigen der Ansprüche 1 bis 6, dadurch gekennzeichnet, daß die Schleppdeichsel (314) und die Stange (310) so ausgebildet sind, daß der Sender, in hängender Lage an einer Platte hängt, die auf dem System zum Wassern und Bergen des Senders liegt.

8. Sender nach Anspruch 4, dadurch gekennzeichnet, daß die Mittel zum Schleppen der akustischen linearen Antenne (105) ein Seil (701) in Form eines V enthalten, das mit seinen beiden Enden an den Enden der Tragflächen (316) befestigt ist, wobei eine Rolle (702) in dem von dem Seil gebildeten V rollt und Mittel (702, 704) vorgesehen sind, um die lineare akustische Antenne an die Rolle anzuhängen.

## Claims

1. Towed acoustic transmitter, of the type comprising a vertical faired acoustic array (303) and a towing hook (314), characterized in that it comprises a ballasted and faired fore body (313) joined to the array by a girder (310) of small cross-section, in that the respective masses of the array and of the body are such that the centre of gravity of the whole is situated near the junction of the girder and the fore body and beneath this girder, and in that the towing hook is articulated to a swivel joint (315) situated on the upper part of the girder above this centre of gravity.

2. Transmitter according to Claim 1, characterized in that the girder (310) is fixed substantially at the centre of the faired array (303) and in that this array also supports horizontal ailerons (312).

3. Transmitter according to either one of Claims 1 and 2, characterized in that it furthermore comprises means (312) for towing a linear acoustic array (105) fixed to the rear of the faired acoustic array (303) along the alignment of the said girder (310).

4. Transmitter according to any one of Claims 1 to 3, characterized in that it furthermore comprises horizontal depressor ailerons (316) fixed to the girder (310) to the rear of the point of fixing of the towing hook (314), so as to obtain a negative downlift effect tending to submerge the transmitter under the action of the towing.

5. Transmitter according to any one of Claims 1 to 4, characterized in that the faired acoustic array (303) comprises a set of distinct transducers (503,513,523) included in individual fairings (603,613,623); these fairings being joined together by vertical fixed planes (601,602) of very thin cross-section.

6. Transmitter according to one of Claims 1 to 5, characterized in that the faired acoustic array (303) is hollow and comprises means enabling seawater to fill these hollow parts during submersion and to escape during recovery.

7. Transmitter according to any one of Claims 1 to 6, characterized in that the towing hook (314) and the girder (310) are devised so as to enable the said transmitter to be fastened in a suspended position from a saddle situated on the transmitter anchorage and capture system.

8. Transmitter according to Claim 4, characterized in that the means for towing the linear acoustic array (105) comprise a V-shaped cable (701) fixed by its two ends to the ends of the said (701) [sic] depressor ailerons (316), a pulley (702) which rolls inside the V formed by the cable, and means (702,704) for fastening the linear acoustic array to the pulley.
